Europäisches Patentamt

European Patent Office

Office européen des brevets

(19)

(11) **EP 1 200 762 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.⁷: **F16K 31/06**

(21) Anmeldenummer: **00958349.3**

(86) Internationale Anmeldenummer:
**PCT/EP00/07446**

(22) Anmeldetag: **01.08.2000**

(87) Internationale Veröffentlichungsnummer:
**WO 01/011279 (15.02.2001 Gazette 2001/07)**

(54) **ELEKTROMAGNETISCH BETÄTIGBARES REGEL- ODER SCHALTVENTIL**

REGULATING OR CONTROL VALVE CAPABLE OF BEING ELECTROMAGNETICALLY ACTUATED

SOUPAPE DE REGULATION OU DE COMMANDE POUVANT ETRE ACTIONNEE PAR VOIE ELECTROMAGNETIQUE

(84) Benannte Vertragsstaaten:
**DE FR GB IT**

(30) Priorität: **05.08.1999 DE 19936832**

(43) Veröffentlichungstag der Anmeldung:
**02.05.2002 Patentblatt 2002/18**

(73) Patentinhaber: **Bosch Rexroth AG**
**97816 Lohr am Main (DE)**

(72) Erfinder:
• **BARTHOLOMÄUS, Reiner**
**97788 Neuendorf (DE)**
• **HÖFLING, Klaus**
**97816 Lohr (DE)**

(74) Vertreter: **Winter, Brandl & Partner**
**Patent- und Rechtsanwaltskanzlei**
**Alois-Steinecker-Strasse 22**
**85354 Freising (DE)**

(56) Entgegenhaltungen:
**DE-A- 19 717 807      US-A- 4 396 037**
**US-A- 5 906 351**

EP 1 200 762 B1

**Beschreibung**

Die Erfindung betrifft ein elektromagnetisch betätigbares Schalt- oder Regelventil, insbesondere ein Proportional-Wegeventil, gemäß dem Oberbegriff des Patentanspruchs 1.

Bei derartigen Ventilen, wie z. B. bei direkt gesteuerten Proportional-Wegeventilen, wird der Ventilkolben mittels einer hubgeregelten Proportional-Magnetanordnung direkt betätigt. Die Ansteuerung der Magnetanordnung hat dann einen zur Messgröße des elektrischen Ansteuersignals proportionalen Hub des Ventilkolbens zur Folge. Mittels eines beispielsweise induktiv arbeitenden Wegsensors kann über den Hub des Magnetankers im Proportional-Magneten indirekt die Lage des Steuerkolbens erfasst und als ein elektrisches Signal zur Lageregelung an eine elektronische Ansteuereinrichtung zurückgeführt werden.

An Ventile dieser Bauart werden immer höhere Ansprüche bezüglich Dynamik und Präzision der Bewegung gestellt. Zu diesem Zweck ist man daher beispielsweise dazu übergegangen, an das Ventilgehäuse einseitig einen Magnet- und Steuerblock anzuflanschen, wobei eine doppelt wirkende Magnetanordnung in der Form eines Zug-/Druck-Magneten Anwendung findet. Der Magnetanker wirkt auf der dem Ventilgehäuse abgewandten Seite mit einem Wegaufnehmer zusammen und steht auf der anderen Seite über einen Stößel in Anlagekontakt mit dem Ventilkolben, der mittels zweier gegensinnig wirkender Zentrierfedem in eine Neutralstellung vorgespannt wird.

Eine ähnliche Konstruktion des Ventils geht aus der EP 0 882 187 A1 hervor, bei dem der Ventilkolben von zwei unterschiedlich starken Fedem gegensinnig beaufschlagt ist, wobei die stärkere Feder in der Ruhestellung des Ventils einen Federteller gegen eine Schulter des Ventilgehäuses bzw. eines Polrohrs der Magnetanordnung drückt.

Es sind weitere Ventilkonstruktionen der eingangs beschriebenen Art bekannt, bei denen der Linearmotor in der Ausgestaltung als Zug-/Druckmagnet jeweils über Zug-/Druckstangen mit dem Ventilkolben verbunden ist. Dabei kann das Wegaufnahmesystem modular zwischen Magnetanordnung und Ventilgehäuse angeordnet sein. Es kann auch der Wegaufnehmer und die Magnetanordnung auf verschiedenen Seiten des Ventilgehäuses liegen.

Es sind auch Regel- oder Schaltventile bekannt, bei denen sich auf jeder Seite des Ventilgehäuses jeweils ein Regel- oder Schaltmagnet befindet, dessen Magnetanker jeweils gegen den Ventilkolben drückt. Hierbei können die als drückende Magnete ausgebildeten Magnetanordnungen zusätzlich durch Druckfedern zur Anlage auf den Ventilkolben gedrückt und somit verspannt werden.

Allen bisherigen Konstruktionen ist gemeinsam, dass der Magnetanker der Magnetanordnungen nur unter Zwischenschaltung weiterer Bauelemente, wie z.B. von Stößeln und dergleichen und gegebenenfalls durch das Vorsehen von speziellen Verbindungen zum Ventilkolben die Stellkraft positionsgenau auf den Ventilkolben übertragen kann. Dies führt zu größeren bewegten Massen, und damit letztlich zu einem größeren erforderlichen Bauvolumen der Magnetanordnung und damit des Ventils, was sich letztlich negativ auf die Dynamik des Ventils auswirken kann.

Der Erfindung liegt deshalb die Aufgabe zugrunde, ein elektromagnetisch betätigbares Schalt- oder Regelventil gemäß der vorstehend beschriebenen Art zu schaffen, das bei vorgegebener Dynamik weniger Bauvolumen und Bauelemente beansprucht.

Diese Aufgabe wird durch die Merkmale des Patentanspruch 1 gelöst.

Erfindungsgemäß wird der Ventilkolben durch zumindest einen Zugmagneten bewegt, dessen Magnetanker von der dem Ventilkolben abgewandten Seite über die den Ventilkolben zentrierende Druckfeder in Anlagekontakt mit dem Ventilkolben gespannt wird. Mit diesem Aufbau gelingt es nicht nur, die von der Magnetanordnung zu bewegende Masse, insbesondere die Magnetankermasse zu verringern, sondern gleichzeitig, die Baulänge der Magnetanordnung und damit des Ventils zu verkürzen, wodurch erhebliches Bauvolumen eingespart wird. Denn die zumindest eine den Ventilkolben zentrierende Feder kann erfindungsgemäß im Polschuh und damit radial innerhalb der Magnetspule angeordnet werden, so dass sich deren Länge nicht zur Länge der Magnetanordnung addiert. Der zumindest eine Zugmagnet kann ohne Führungstange arbeiten, wobei der Magnetanker direkt gelagert wird, so dass sich zusätzlich Kostenvorteile ergeben.

Da der Anker eines Magneten, egal ob drückend oder ziehend, grundsätzlich in die Spule hineingezogen wird, ergibt sich für einen ziehenden Magneten, dass das Überstandsmaß des Magnetankers bezüglich der Magnetspule in dem Bauraum zu liegen kommt, der ohnehin als Mindestwandstärke neben der Magnetspule zur Ausbildung des Magnetkreises erforderlich ist. Damit ergibt sich zwangsläufig, dass nicht nur die Magnetanordnung insgesamt, sondern vor allen Dingen der Magnetanker eines ziehenden Magneten kürzer als diejenige eines drückenden Magneten ausgeführt werden kann, was sich äußerst günstig auf die Dynamik der Magnetanordnung und damit des Ventils auswirkt. Weil erfindungsgemäß darüber hinaus die Druckfeder beim ziehenden Magneten im Polschuh des Magneten integriert werden kann, mit der Folge, dass die Ventilbaulänge weiter verringert wird, erlaubt es das erfindungsgemäße Konzept sogar, die Spulenwicklung des Zugmagneten in axialer Richtung zu verlängern, um einen größeren Spielraum für die maximale magnetische Kraft zu erhalten. Während somit ein gewöhnliches, auf der Basis von Druckmagneten aufgebautes Ventil mit "losen Ankern" arbeitet, wobei lediglich der Ventilkolben zwischen den Zentrierfedem eingespannt ist, erfolgt beim erfindungsgemäßen Ventil eine Verspannung zwischen Magnetanker und Ventilkolben durch die gegensinnig wirkenden Druckfedern. Dadurch ergibt sich die Möglichkeit, eine Zugkraft aufnehmende Verbindung zwischen Ventilkolben und dem zugehörigen Zugmagneten entfallen zu lassen, wodurch der Aufbau des Ventils nicht nur raumsparender sondern auch einfacher wird.

Wenn auf jeder Seite des Ventilkolbens jeweils ein ziehender Magnet vorgesehen wird, ergibt sich eine noch größere Raumeinsparung. Von zusätzlichem Vorteil ist dabei, dass sich ein montagetechnisch einfacherer Aufbau des Ventils ergibt, weil die den Magnetanker beaufschlagende Druckfeder - vom Ventilkolben aus gesehen - unmittelbar hinter dem Magnetanker angeordnet wird und damit leicht montiert und vom Magnetanker mitgenommen werden kann. Insgesamt kann damit durch die Verwendung kürzer bauender Zugmagnete bei gleichem Kupferanteil Material, Bearbeitungszeit und Bauraum eingespart werden, wobei sich durch die Verringerung der bewegten Masen sogar eine bessere Dynamik des Ventils erzielen lässt.

Es hat sich herausgestellt, dass es durch geeignete Abstimmung der den Ventilkolben zentrierenden Federkräfte auf das Gesamtsystem ohne weiteres gelingt, selbst bei großer Ventildynamik einen ständigen Anlagekontakt zwischen Magnetanker und Ventilkolben aufrecht zu erhalten, so dass eine mechanische Mitnehmerkonstruktion zwischen Ventilkolben und Magnetanker entfallen kann und trotzdem eine exakte Positionsregelung des Ventilkolbens möglich ist, ohne dass sich der Weggeber am Ventilkolben befinden muss. Auf diese Weise gelingt es, unter weiterer Verringerung der axialen Baulänge, Positionsregelungen - vorzugsweise mit elektrischer Rückführung - anzuwenden, bei denen die Bewegung des Magnetankers abgegriffen oder - wie in der eigenen älteren Patentanmeldung 19823529, auf die hiermit Bezug genommen wird, beschrieben - ein Kraftsensor als Weggeber eingesetzt wird.

Vorteilhafte Ausgestaltungen der Erfindung sind Gegenstand der Unteransprüche.

Mit der Weiterbildung der Ansprüche 18 und/ oder 19 und/oder 20 gelingt es, Wirbelstromverluste zu reduzieren und damit zu noch kürzeren Schaltzeiten bzw. zu einer weiteren Erhöhung der Dynamik des Systems zu gelangen.

Vorteilhafterweise wird die Vorspannkraft der zumindest einen Druckfeder gemäß Anspruch 2 so groß gewählt, dass Störkräfte, wie Reibungs- und Strömungskräfte, die am Ventilkolben und an dem dem Ventilkolben folgenden Magnetanker angreifen, nicht dazu führen, dass der Magnetanker des erregten Magneten vom Ventilkolben abhebt, weil seine Kraft die Federkraft der an ihm angreifenden Feder überwinden kann. Ein solches Abheben würde sich bei einem positionsgeregelten Ventil mit einem Weggeber oder einem Kraftsensor als Weggeber, wie es Gegenstand des Anspruchs 3 ist, negativ auf die Regelungsgenauigkeit auswirken. Dabei hat die genaue Größe der Vorspannkraft keinen Einfluss auf die erforderliche Magnetkraft, da der Magnetanker nur die unabhängig von der Vorspannung immer gleiche, sich mit dem Verschiebeweg ändernde Differenzkraft zwischen den Federkräften aufbringen muß. Der Magnet muss daher nicht für größere Kräfte ausgelegt werden, was sich vorteilhaft auf die Baugröße des Ventils auswirkt.

Mit der Maßnahme nach Anspruch 4 wird die Dynamik der Bewegungssteuerung durch eine einfache Anpassung der Federkennlinie der Druckfedm an die Magnetanordnung optimierbar.

Die Gestaltung nach Anspruch 5 trägt zur weiteren Verringerung des erforderlichen Bauvolumens bei. Dabei ist der Magnetanker vorzugsweise so weit hohlgedreht, wie dies die magnetischen Flusslinien zulassen, ohne dabei eine zu große Magnetkraft-Einbuße hervorzurufen.

Grundsätzlich kann sich die Druckfeder am Polschuh des Magneten abstützen. Eine besonders vorteilhafte Variante des Ventils ergibt sich dann, wenn die Vorspannkraft der Druckfedm gemäß Anspruch 6 einstellbar ist. Dadurch lässt sich eine Feinabstimmung der Federkraft auf die Kennlinie der Magnetanordnung erzielen, ohne den benötigten Bauraum empfindlich zu vergrößern.

Wenn der Magnetanker gemäß Anspruch 7 zumindest in der ersten Stellung des Ventils in das Ventilgehäuse hineinragt, wird die Baulänge des Ventils weiter verkürzt, wodurch bei vorgegebener Gesamtlänge des Ventils mehr Spielraum für die Gestaltung der Magnetanordnung verbleibt.

Der erfindungsgemäße Aufbau des Ventils eignet sich für alle elektromagnetisch betätigbaren Ventile, wobei die Vorzüge der Erfindung dann besonders zum Tragen kommen, wenn ein Ventil äußerst platzsparend eingebaut und mit einer sehr guten Dynamik betrieben werden soll. Das Ventil eignet sich insbesondere für die Kombination mit einer Magnetanordnung mit internem Lageregelkreis, wie er regelmäßig in Verbindung mit Proportionalmagneten Verwendung findet. Der Weggeber erstreckt sich hier vorteilhafterweise in Form einer Stange (Ferritkern) durch die zugehörige Zentrierfeder. Dabei muss der Weggeber nicht am Ventilkolben angreifen, dadurch die erfindungsgemäße Abstimmung der Zentrierkräfte auf die Magnetkraft unter Einbeziehung der am Kolben und am Magnetanker wirkenden Reibungs- und Strömungskräfte ein Abheben des Magnetankers vom Ventilkolben ausgeschlossen ist.

Es ist jedoch gleichermaßen möglich, die Lageregelung des Ventils dadurch vorzunehmen, dass die momentane, dem angesteuerten Magneten zugeordnete Zentrierkraft abgegriffen und so als Maß für den Weg des Magnetankers herangezogen wird, wie dies in der eigenen älteren DE-A-19823529 beschrieben ist. In diesem Fall stützt sich die Zentrierfeder auf einem Kraftsensor ab, der vorzugsweise in einem Polschuh des Magneten aufgenommen ist, und zwar vorzugsweise derart, dass eine axiale Lagejustierung zur Einstellung Federzentrierkraft ermöglicht ist.

Wenn bei dem Ventil lediglich eine Magnetanordnung mit nur einem, ziehenden Magneten verwendet wird, so ist es zur Minimierung der Baulänge des Ventils weiterhin von Vorteil, wenn sich gemäß Anspruch 9 die dem Magneten abgewandte Druckfeder unmittelbar am Ventilkolben abstützt.

In diesem Fall ist es von Vorteil, wenn der Magnet derart aufgebaut ist, dass eine Linearisierung der Kennlinie erzielbar ist.

Eine vorteilhafte Anwendung der Erfindung auf Proportionalventile ist Gegenstand der Ansprüche 11 bis 16. Über eine elektrische Rückführung kann ein derartiges Ventil exakt geregelt werden.

Es ist vorzuziehen, in diesem Fall die Kennlinien der Druckfedern aufeinander sowie auf die Kennlinien der beiden ziehenden Magneten im Hinblick auf eine Optimierung der Dynamik abzustimmen (Anspruch 12).

Grundsätzlich kann das erfindungsgemäße Ventil mit allen gängigen Arten der Magnetanordnung bestückt werden. Wenn beide ziehenden Magneten jedoch von Proportionalmagneten gebildet sind, ist es von Vorteil, diese gegensinnig zu aktivieren. Dabei hat sich herausgestellt, dass eine Bestromung der beiden Magnete besonders vorteilhaft ist, um auf diese Weise den steilsten, das heisst wirksamsten Kennlinienbereich des Magneten zu nutzen. Es ist jedoch gleichermaßen möglich, die Erfindung bei Proportionalventilen so anzuwenden, dass die natürlichen Nicht-Linearitäten der Magnete ausgeglichen werden und eine Strom-Proportional-Kennlinie auch bei Proportionalventilen, d.h. nicht wegrückgeführten Ventilen, entsteht.

Untersuchungen, insbesondere im Zusammenhang mit der Linearisierung des Magnetantriebs haben gezeigt, dass sich die besten Ergebnisse bezüglich Dynamik mit dem erfindungsgemäßen Antrieb dann erzielen lassen, wenn gemäß Anspruch 17 der ziehende Magnet von einer Kombination aus Axial- und Radialmagnet gebildet ist, bei dem die Magnetkraftkennlinien im wesentlichen radial verlaufen.

Im folgenden werden Ausführungsbeispiele der Erfindung anhand schematischer Zeichnungen näher erläutert. Es zeigen:

Fig. 1 eine schematische Schnittdarstellung des elektromagnetisch betätigbaren Schalt- oder Regelventils gemäß einer ersten Ausführungsform;

Fig. 2A und Fig. 2B jeweils Schnittdarstellungen eines elektromagnetisch betätigbaren Schalt- oder Regelventils, wobei in der Fig. 2A die Anordnung nach dem Stand der Technik mit einem drückenden Magneten und in Fig. 2B die erfindungsgemäße Anordnung mit einem ziehenden Magneten dargestellt ist;

Fig. 3 die schematische Darstellung einer weiteren Ausführungsform mit reduzierter Länge des Spulenwickelfensters;

Fig. 4A und Fig. 4B schematische Darstellungen eines elektromagnetisch betätigbaren Schalt- oder Regelventils, wobei die Fig. 7B den erfindungsgemäßen Aufbau und Fig. 7A den Aufbau nach dem Stand der Technik mit drückenden Magneten zeigt; und

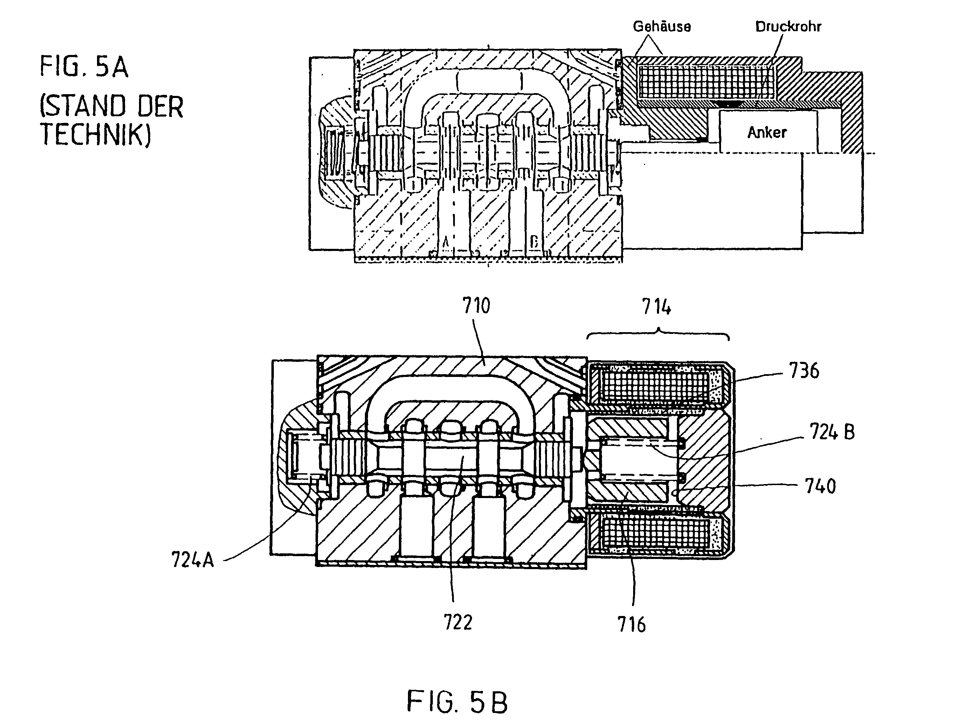

Fig. 5A und Fig. 5B schematische Darstellungen eines modifizierten elektromagnetisch betätigbaren Schalt- oder Regelventils, bei dem die Magnetanordnung nur auf einer Seite des Ventilgehäuses angeordnet ist,

wobei wiederum die erfindungsgemäße Bauart (Fig. 5B) der Bauart nach dem Stand der Technik (Fig. 5A) gegenübergestellt ist.

In den Figuren werden für diejenigen Komponenten, die vergleichbare Bauteile von Ventilen abgewandelter Ausführungsformen bezeichnen, ähnliche Bezugszeichen verwendet, denen eine laufend ansteigende Ordnungsziffer vorangestellt ist.

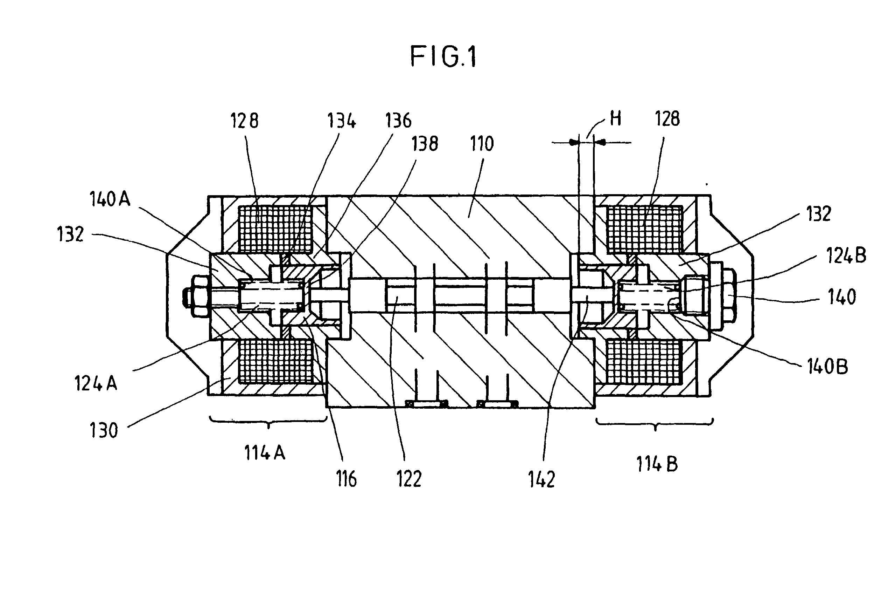

In Fig. 1 ist mit dem Bezugszeichen 110 das Ventilgehäuse bezeichnet, in dem der Ventilkolben 122 gleitend bewegbar verschiebbar ist. Zur Beschreibung der Erfindung ist es nicht erforderlich, den Aufbau des Ventils im einzelnen zu beschreiben. Entscheidend ist lediglich, dass es sich um ein elektromagnetisch betätigbares Schalt- oder Regelventil handelt, das heisst um ein Ventil, das mittels einer Magnetanordnung steuerbar ist. Deshalb sind in der Fig. 1 auch die Anschlüsse des Ventilgehäuses nur schematisch angedeutet. Die Magnetanordnung besteht aus zwei, zu beiden Seiten des Ventilgehäuses 110 angeflanschten Magneten 114A, 114B, die beispielsweise als Proportionalmagnete ausgeführt sind. Mit dem Bezugszeichen 128 ist die Magnetspule bezeichnet, die in einem Magnetgehäuse 130 aufgenommen ist. Mit dem Bezugszeichen 132 ist ein Polkern bzw. ein Polschuh bezeichnet, der über eine Zwischenzone 134 an ein druckdichtes Ankerrohr 136 anschließt. Aus Vereinfachungsgründen wird bei der Beschreibung der Fig. 1 lediglich der in Fig. 1 linke Magnet 114A beschrieben. Der Magnet 114B ist spiegelbildlich zum Magneten 114A ausgebildet, so dass sich ein Eingehen auf diese Konstruktion erübrigt.

Im Ankerrohr ist gleitend verschiebbar der Magnetanker 116 gelagert. Der Magnetanker hat die Form eines Bechers, genauer gesagt die Form eines Doppelbechers, dessen zylindrischer Körper in etwa mittig eine Trennwand 138 aufweist. An dieser Trennwand 138 stützt sich jeweils eine Zentrierfeder 124A, B ab, die auf der anderen Seite an einer Abstützfläche 140A, B im Polschuh 132 anliegt. Die Abstützflächen 140A, B sind vorzugsweise in Axialrichtung einstellbar, um die Vorspannkraft der Zentrierfedern 124 justieren zu können. Mit dem Bezugszeichen 140 ist eine Einstellschraube angedeutet.

Die Zentrierfedem 124A, B drücken die Magnetanker 116 über die zugehörige Trennwand 138 gegen einen Axialfortsatz 142 des Ventilkolbens 122, wodurch dieser in seine Mittelstellung zentriert ist.

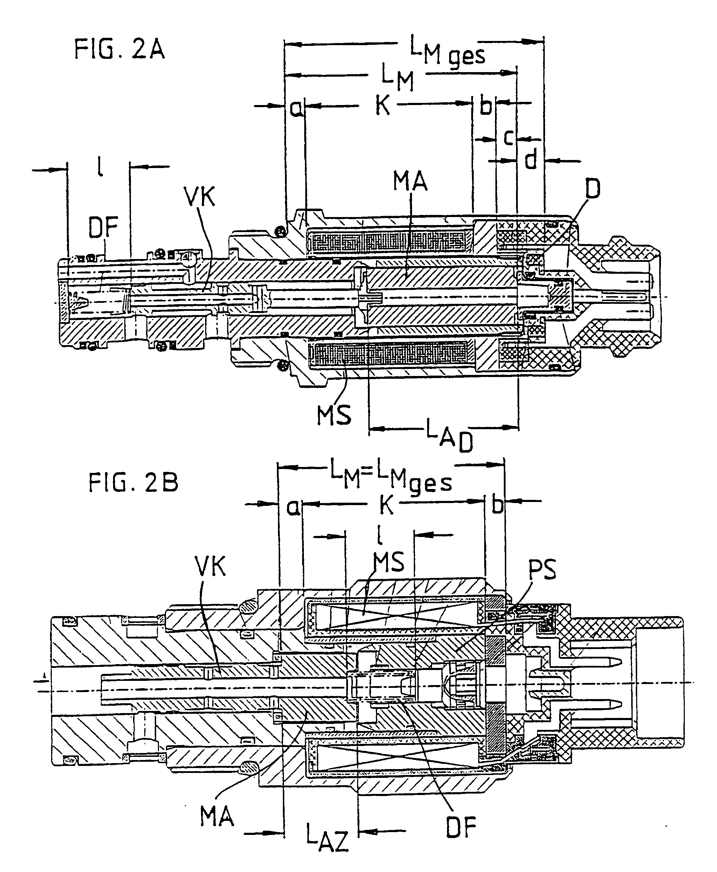

Man erkennt auf der Darstellung gemäß Fig. 1, dass der Magnetanker 116 bezüglich der Magnetspule 128 zum Ventilkolben 122 hin versetzt ist, das heißt, dass es sich bei den Magneten 114A, 114B um sogenannte "ziehende" Magnete handelt, deren Magnetanker 116 von den Zentrierfedem 124A, B unmittelbar gegen den Ventilkolben 122 gespannt sind. Auf diese Weise ergibt sich eine in axialer Richtung sehr kompakte Konstruktion, die dadurch noch verkürzt werden kann, dass das Ankerrohr 136 und/oder der Magnetanker 116 bereits in der zentrierten Mittelstellung des Ventilkolbens 122 axial um das Maß H in das Ventilgehäuse 110 hineinragen. Im folgenden soll anhand der Figuren 2A und 2B die Hintergründe der Baulängenverkürzung bei Verwendung eines "ziehenden" Magneten kurz erläutert werden:

Fig. 2A zeigt einen sogenannten "drückenden Magneten" in einem direkt gesteuerten Proportional-Wegeventil, während Fig. 2B ein Ventil mit Innenraum-Magneten darstellt. Bei diesem Ventil wird ein integrierter Magnet verwendet, das heißt ein Magnet, bei dem der Magnetanker MA, der Bestandteil des Ventilkolbens ist, bei Ansteuerung der Magnetspule MS den Ventilkörper VK in Richtung auf die Magnetspule MS hin zieht. Man erkennt auf den Darstellungen gemäß Fig. 2A, B, dass bei gleichem Magnetkreis der "drückende" Magnet (Fig. 2A) um das Maß c länger baut, weil der Magnet gemäß Fig. 2A einen Abschlussdeckel benötigt, der die Baulänge der Ausführungsform mit "drückendem" Magnet um das Maß d, das heisst um die Stärke eines Dekkels D aus nicht magnetischem Werkstoff weiter vergrößert, während beim "ziehenden" Magneten dieser Abschlussdeckel innerhalb des Magnetkreises in dem Maß b realisiert werden kann.

Da der Magnetanker MA - unabhängig davon, ob der Magnet "drückend" oder "ziehend" arbeitet - immer in die Magnetspule MS hineingezogen wird, ergibt sich beim "drückenden" Magneten das Maß c. Dieses Maß ist beim "ziehenden" Magneten innerhalb des für den Magnetkreis notwendigen Maßes a realisierbar. Bereits aus diesen Überlegungen ergibt sich, dass der Magnetanker mit integriertem Magnet eines "ziehenden" Magneten, wie z. B. der Anker MA beim Ventil gemäß Fig. 2B prinzipiell kürzer als diejenige eines "drückenden" Magneten ausgeführt werden kann, was durch die Maße $L_{AD}$ und $L_{AZ}$ in Fig. 2 zum Ausdruck gebracht ist.

Es ist ferner zu berücksichtigen, dass beim Anbau von Magneten an Ventile regelmäßig Druckfedem zur Anwendung kommen. Während beim "drückenden" Magneten (Fig. 2A) die Druckfeder DF mit ihrer Länge I die Gesamtlänge des Ventils vergrößert, kann diese beim "ziehenden" Magneten im Polschuh PS des Magneten integriert werden.

Es ergibt sich somit zusammenfassend, dass ein "drückender" Magnet bereits um die Maße c + d länger baut als ein "ziehender" Magnet. Ferner wird die Gesamt-Ventilbaulänge eines Ventils mit "drückendem" Magnet maximal um die Summe der Maße c + d + I vergrößert.

Für die Ausführungsform gemäß Fig. 1 bedeutet dies, dass sich durch den erfindungsgemäßen Aufbau eine sehr kompakte Magnet- und Ventilkonstruktion ergibt, mit dem besonderen Vorteil, dass sich aufgrund der verringerten Ankermasse des Magnetankers 116 eine wesentlich verbesserte Dynamik des Ventils sicherstellen läßt.

Der Aufbau des Ventils in der Ausgestaltung nach Fig. 1 wird nicht nur raumsparender, sondern auch kostengünstiger, weil weniger Material bearbeitet werden muss und weniger Komponenten verwendet werden. Eine Besonderheit der Ausführungsform nach Fig. 1 liegt darin, dass durch die feste Verspannung zwischen Zentrierfedem 124A, B, Magnetanker 116 und Ventilkolben 122 keine zusätzlichen Bauteile notwendig werden, um sicherzustellen, dass der Ventilkolben 122 exakt der Bewegung des angesteuerten Magnetankers 116 folgt. Zu diesem Zweck ist die Vorspannkraft der Zentrierfedem 124A, B so groß gehalten, dass auch bei einer Übererregung der Magnete und/oder bei Auftreten systembedingter Reibungs- und/oder Strömungskräfte an den bewegten Teilen des Ventils die feste Anlage der Magnetanker am Ventilkolben in der Phase der Bewegung aufrechterhalten bleibt. Mit anderen Worten, es muss die folgende Bedingung erfüllt bleiben:

$$F_{Fmin} > F_{Mmax} + F_S + F_R$$

wobei folgendes gilt:
$F_{Fmin}$ minimale Federkraft
$F_{Mmax}$ maximale Magnetkraft
$F_S$ Strömungskräfte
$F_R$ Reibungskräfte am Ventilkolben und am Magnetanker

Mit dieser Abstimmung zwischen Magnetanordnung und Zentrierfeder kann die Ventilkonstruktion ohne zusätzliche mechanische Mitnehmereinrichtungen in lageregelte Proportional-Wegeventile integriert werden, bei denen ein Weggeber oder ein Kraftsensor als Weggeber vorliegt, der die Position des Magnetankers abgreift. Für diesen Fall sind grundsätzlich zwei Ausführungen denkbar:

Gemäß der ersten Variante kann die Bewegung des Magnetankers 116 mittels einer nicht näher gezeigten Messstange abgegriffen werden, die an der Trennwand 138 befestigt ist und durch das Innere der Zentrierfeder 124A, B zum in Fig. 1 nicht gezeigten Wegaufnehmer geführt ist, der beispielsweise induktiv arbeiten kann.

Eine Alternative hierzu besteht darin, dass die Stützfläche 140A, B für die Zentrierfedem 124 von einem Kraftsensor gebildet sind, der - wie in der eigenen älteren DE-A-19823529 beschrieben - über die Druckkraft die Lage des Magnetankers 116 errechnet. Auf diese Weise eignet sich das erfindungsgemäße Konzept zum Aufbau von Wege-, Schalt- und/oder Porportionalventilen, wobei die eingangs beschriebenen Vorteile durchgehend erzielbar sind. Selbstverständlich sind die Kennlinien der Magnete 114A, B vorzugsweise aufeinander abgestimmt, um die Schalt- bzw. Regelgenauigkeit auf einem relativ hohen Niveau zu halten. Höchste Dynamik wird dann erreicht, wenn die magnetische Kraftrate, das heisst die sich aus dem Magnetkreis automatisch ergebende Kraft maximal gehalten wird, wobei vorzugsweise diese Kraft bei Proportionalventilen an die mechanische Federrate angepasst wird.

Die Ausführungsform nach Fig. 1 eignet sich sowohl für Schaltventile mit unlinearisierten Magneten ohne Mittel- oder Nullstrom, sowie für Proportionalventile mit linearisierten Magneten mit oder ohne Nullstrom.

Neben den steuerungs- und regelungstechnischen Vorteilen hat das erfindungsgemäße Konzept noch den weiteren Vorteil, dass die Zentrierfedem 124A, B vom Ventilkolben 122 aus gesehen jeweils hinter dem Magnetanker 116 angeordnet sind, so dass sie leicht vom Magnetanker mitgenommen werden können. Dies wirkt sich nicht nur vorteilhaft auf den Bewegungsablauf bzw. auf die Kraftübertragung zwischen Ventilkolben und Magnetanker aus, sondern es führt auch zu herstellungs- und montagetechnischen Vorteilen.

Abweichend von der gezeigten Ausführungsform kann der Ventilkolben auch in den Magnetankern 116 eingehängt sein, wobei dann die Vorspannkraft der Feder geringer sein kann.

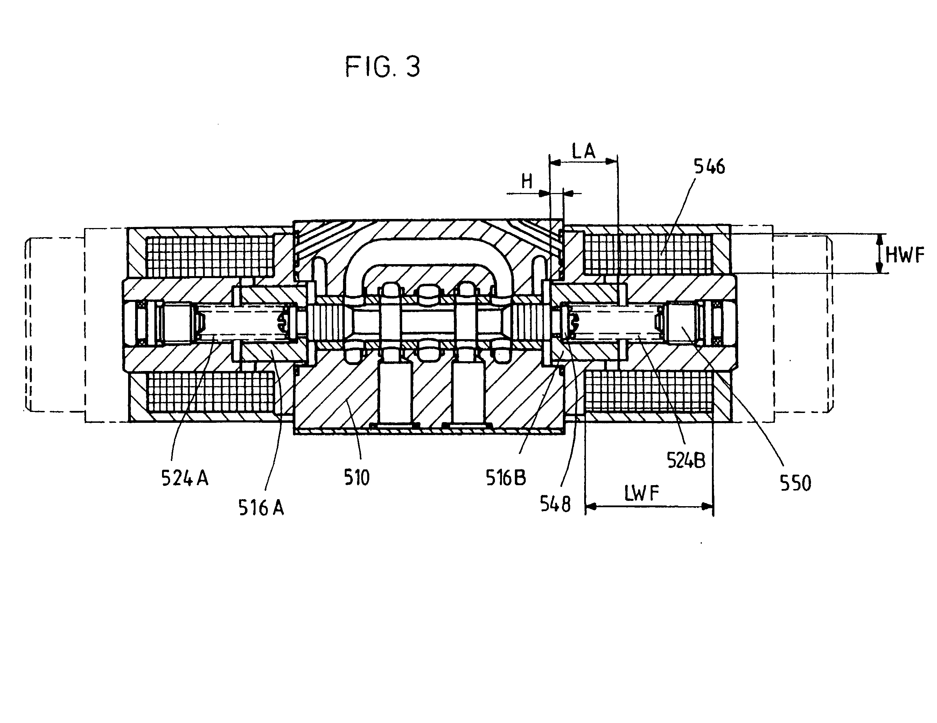

Fig. 3 zeigt - maßstabsgetreu - eine weitere Ausführungsform des elektromagnetisch betätigbaren Schalt- oder Regelventils, die sich dadurch ergibt, dass ein herkömmliches direkt gesteuertes Proportional-Wegeventil der Anmelderin, das herkömmlicherweise eine Magnetanordnung mit einem "drückenden" Magneten verwendet, auf zwei "ziehende" Magnete zu beiden Seiten des Ventilkolbens umgestellt worden ist. Allein durch die Umstellung auf den Zugmagneten ergibt sich schon bei gleicher Ankermasse eine erhebliche Reduzierung der Magnetbaulänge. Man erkennt aus der Darstellung, dass der Magnetanker 516 erneut in der zentrierten Mittelstellung des Ventilkolbens 522 um das Maß H mit dem Ventilgehäuse 510 überlappt, um die axiale Baulänge des Ventils weiter zu verringern.

Eine weitere Abwandlung von den zuvor beschriebenen Ventilen liegt darin, dass die Zentrierfedem 524 zu beiden Seiten mit einstellbaren Auflageflächen 548, 550 zusammenwirken, um auf diese Weise eine Justierung der Zentrierkräfte und eine Abstimmung auf die Magnetkennlinien erzielen zu können. Auch das Ventil gemäß Fig. 3 kann zur Sicherstellung einer Positionsregelung mit einem Wegaufnahmesystem kombiniert sein, beispielsweise dadurch, dass die Auflagefläche 550 einen Kraftsensor integriert, dessen Ausgangssignal in ein Lagesignal umgerechnet wird.

Die Ausführungsform nach Fig. 3 ist im Hinblick auf eine erhebliche Verkürzung der Gesamtventilbaulänge gestaltet. Zu diesem Zweck wurde die Höhe HWF des Spulenwickelfensters 546 etwas vergrößert, so dass die Länge LWF des Spulenwickelfensters 546 verringert werden konnte. Unter Beibehaltung der Magnetkraft eines herkömmlichen Druckmagneten ergibt sich somit ein quadratischer Anker, mit der Folge, dass das Ventil kleiner baut und und die Steuerung dennoch eine höhere Dynamik hat, was sich allein aus der 50 %igen Gewichtsreduzierung des Magnetankers 516 herleitet. In Fig. 6 ist mit gestrichelten Linien die Außenkontur des den Ausgangspunkt der Erfindung bildenden Ventils mit Druckmagneten eingetragen. Man erkennt, dass bei gleicher Leistung, einfacherem Aufbau und höherer Dynamik eine Reduzierung der Gesamtbaulänge des Ventils um mindestens 25 % möglich ist.

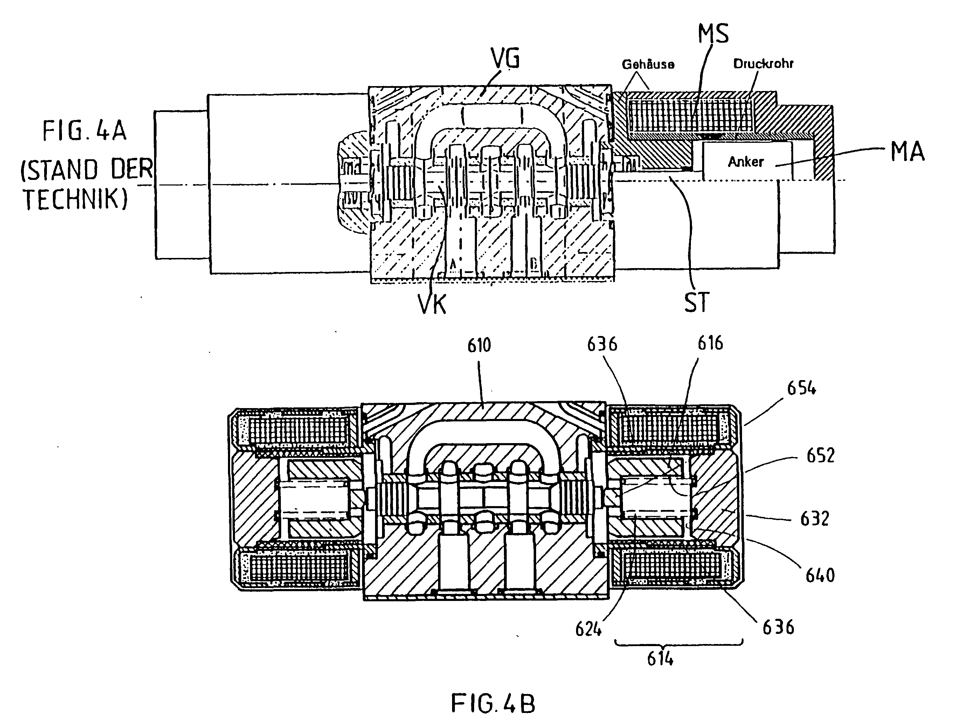

Anhand der Fig. 4 und 5 werden weitere Anwendungsbeispiele der Erfindung und ihre Auswirkungen auf die Reduzierung der Gesamtbaulänge des Ventils erläutert. In den Fig. 4A bzw. 5A ist das Ventil mit Druckmagneten dargestellt, während in den Fig. 4B bzw. 5B das Ventil mit den gleichen Funktionen, jedoch mit der erfindungsgemäßen Umgestaltung gezeigt ist. Als Ausgangspunkt werden für beide Fälle (Druckmagnet, Zugmagnet) Aussendurchmesser der Magnetanordnung von etwa 45 mm herangezogen.

Beide Magnete haben einen in etwa gleich großen Ankerdurchmesser. Der Anker 616 des erfindungsgemäßen Ventils ist jedoch kürzer und aufgrund seiner Hohlbohrung 652 wesentlich leichter als der "drückende" Anker mit angeformtem Stössel ST, der gleichzeitig zur Lagerung herangezogen wird. Man erkennt sehr deutlich aus den Darstellungen in den Fig. 4A und 4B, dass sich bei der herkömmlichen Gestaltung nach Fig. 4A im Magneten zum Ventilgehäuse VG hin eine Materialanhäufung ergibt, die zur Kraftübertragung vom Magnetanker MA zum Ventilkolben VK mittels eines Stössels ST überbrückt werden muss. Die Wirkungsweise des "drückenden" Magneten führt also dazu, dass der Anker MA zur Rückseite des Magneten ausserhalb der Spule MS, also baulängenvergrößemd liegen muss. Demgegenüber fällt diese Baulänge bei der erfindungsgemäßen Gestaltung des Ventils weg, wobei besondere Vorteile dann erzielbar sind, wenn der Magnetanker 616 direkt im Polrohr 636 gelagert ist.

Auch bei der Ausführungsform gemäß Fig. 4B stützt sich die Zentrierfeder 624 einerseits am Boden 654 des becherförmigen Magnetankers 616 und andererseits am Polschuh 632 ab, der vorzugsweise in axialer Richtung einstellbar am Magnetgehäuse festgelegt ist, um die Vorspannkraft der Zentrierfeder 624 beeinflussen zu können.

Wenn Ventile mit zwei Magneten - jeweils einer auf einer Seite des Ventilgehäuses ausgestattet werden, können verschiedene Arten der Ansteuerung der beiden Magnete gewählt werden, wobei es bei Schaltventilen möglich ist, auch mit unlinearisierten Magneten ohne Mittel- oder Nultstrom zu arbeiten. Bei Proportionalventilen ist es vorzuziehen, linearisierte Magnete zu verwenden, wobei diese mit oder ohne Nullstrom ausgeführt werden können.

Die Erfindung wurde vorstehend anhand von Ventilen erläutert, bei denen sich zu beiden Seiten des Ventilkolbens jeweils ein "ziehender" Magnet befindet. Die Ausführungsform nach Fig. 5B verwirklicht das erfindungsgemäße Konzept mit einem einseitig am Ventilgehäuse 710 angeflanschten Zugmagneten 714. Auch dieses Ventil arbeitet nicht mit einem "losen" Anker. Vielmehr ist der Anker 716 erneut zusammen mit dem Ventilkolben 722 zwischen den beiden Zentrierfedem 724B und 724A zusammengespannt, wobei sich die Zentrierfeder 724A unmittelbar am Ventilkolben 722 abstützt. In Fig. 5A ist demgegenüber eine herkömmliche Ventilanordnung unter Verwendung eines "drückenden" Magneten dargestellt. Man erkennt die deutliche Verkleinerung der axialen Baulänge des Ventils. Da bei dem Ventil nach Fig. 5B lediglich ein Magnet verwendet wird, ist es von Vorteil, die Polrohre 736 des Magneten 714 mittels eines mechanischen Konus zu linearisieren.

Die Erfindung schafft somit ein elektromagnetisch betätigbares Schalt- oder Regelventil, insbesondere in der Ausgestaltung als Proportional-Wegeventil, das einen Ventilkörper in Form eines Ventilkolbens hat, welcher gegen die Kraft seiner Federeinrichtung von einer elektrisch angesteuerten Magnetanordnung mit zumindest einem linear bewegbaren Magnetanker aus einer ersten Stellung heraus in zumindest eine weitere Funktionsstellung verschiebbar ist. Die Magnetanordnung ist im wesentlichen koaxial zur Bewegungsrichtung des Ventilkörpers angeordnet, und der Ventilkolben ist über gegensinnig wirkende Druckfedern in die erste Stellung vorgespannt. Zur Verbesserung der Dynamik eines derartigen Ventils unter gleichzeitiger Verringerung des erforderlichen Bauvolumens kommt mindestens ein "ziehender" Magnet zur Anwendung, der von der zugehörigen Druckfeder direkt gegen den Ventilkolben gespannt ist.

**Patentansprüche**

1. Elektromagnetisch betätigbares Schalt- oder Regelventil, insbesondere Proportional-Wegeventil, mit einem Ventilkörper in der Ausgestaltung als Ventilkolben, der gegen die Kraft einer Federeinrichtung (124A,B; 524A,B; 624A,B; 724A,B) von einer elektrisch angesteuerten Magnetanordnung (114A,B; 714) mit zumindest einem linear bewegbaren Magnetanker (116; 516; 616; 716) aus einer ersten Stellung heraus in zumindest eine weitere Funktionsstellung verschiebbar ist, wobei die Magnetanordnung im wesentlichen koaxial zur Bewegungsrichtung des Ventilkolbens (122; 722) angeordnet ist und der Ventilkolben über gegensinnig wirkende Druckfedem (124A,B; 524A,B; 624A,B;

724A,B) in die erste Stellung (Nullstellung) vorgespannt ist, **dadurch gekennzeichnet, dass** der Magnetanker (116; 516; 616; 716) Bestandteil eines ziehenden Magneten ist und von der zugehörigen, auf der dem Ventilkolben abgewandten Seite des Magnetankers augeordneten Druckfeder (124A,B; 524A,B; 624A,B; 724B) direkt gegen den Ventilkolben (122; 722) gespannt ist.

2. Ventil nach Anspruch 1, **dadurch gekennzeichnet, dass** die Vorspannkraft der Druckfeder (124A,B; 524A,B; 624A,B; 724A,B), gegen die der ziehende Magnetanker (116; 516; 616; 716) arbeitet in jeder Phase der Betätigung größer ist als die Summe aus der maximalen Magnet-Zugkraft und den am Ventilkolben (122; 722) angreifenden Störkräften, wie Reibungs- und Strömungskräften.

3. Ventil nach Anspruch 1 oder 2, **gekennzeichnet, durch** die Ausbildung als positionsgeregeltes Ventil, bei dem die Position des Magnetankers (116; 516; 616; 716) mittels eines Weggebers unmittelbar oder mittels eines Kraftsensors mittelbar erfassbar ist.

4. Ventil nach einem der Ansprüche 1 bis 3, **dadurch gekennzeichnet, dass** die Federkennlinie der Druckfedem (124A,B; 524A,B; 624A,B; 724A,B) an die magnetische Kraftrate der Magnetanordnung (114A,B; 714) derart angepasst ist, dass sich ein Höchstmaß an Dynamik der Ventilbewegungssteuerung ergibt.

5. Ventil nach einem der Ansprüche 1 bis 4, **dadurch gekennzeichnet, dass** der zumindest eine Magnetanker (116; 316; 516; 616; 716) unmittelbar im Polrohr (136; 636; 736) des ziehenden Magneten (114A,B; 614; 714) gelagert ist und im wesentlichen Becherform zur Aufnahme der zugehörigen Druckfeder (124A,B; 524A,B; 624A,B; 724A,B) aufweist.

6. Ventil nach einem der Ansprüche 1 bis 6, **dadurch gekennzeichnet, dass** die Vorspannkraft der Druckfedern (124A,B; 524A,B; 624A,B; 724A,B) justierbar ist, indem eine Abstützfläche (140A,B; 640; 740) für die Druckfedem (124A,B; 524A,B; 624A,B; 724A,B), vorzugsweise die dem Ventilkolben (122; 722) abgewandte, äußere Stützfläche (140A,B; 640; 740) lagemäßig bezüglich des Magnetgehäuses (130) einstellbar ist.

7. Ventil nach einem der Ansprüche 1 bis 6, **dadurch gekennzeichnet, dass** der zumindest eine Magnetanker (116; 516) zumindest in der ersten Stellung (Nullstellung) des Ventils in das Ventilgehäuse (110; 510; 610; 710) hinein ragt.

8. Ventil nach einem der Ansprüche 1 bis 7, **dadurch**

**gekennzeichnet, dass** bei Verwendung eines Weggebers für einen internen Lageregelkreis der Magnetanordnung (114A,B; 714) eine Messstange durch eine der beiden Druckfedern (124A,B; 524A, B; 624A,B; 724A,B) geführt ist.

9. Ventil nach einem der Ansprüche 1 bis 8, **dadurch gekennzeichnet, dass** sich bei Verwendung einer Magnetanordnung mit nur einem ziehenden Magneten (714) die dem Magneten abgewandte Druckfeder (724A) unmittelbar am Ventilkolben (722) abstützt.

10. Ventil nach Anspruch 9, **dadurch gekennzeichnet, daß** der ziehende Magnet (114A,B; 714) einen Aufbau hat, mit dem eine Linearisierung seiner Kennlinie erzielbar ist.

11. Ventil nach einem der Ansprüche 1 bis 8, **dadurch gekennzeichnet, dass** bei Verwendung einer Magnetanordnung mit zwei ziehenden Magneten (114A,B;) der gesamte Antriebsstrang bestehend aus Magnetanker (116A; 516A; 616A) der einen Seite, Ventilkolben (122) und Magnetanker (116B; 516B; 616B) der anderen Seite durch die Druckfedern (124A,B; 524A,B; 624A,B) verspannt ist.

12. Ventil nach Anspruch 11, **dadurch gekennzeichnet, dass** die Kennlinien der Druckfedern (124A,B; 524A,B; 624A,B; 724A,B) aufeinander sowie auf die Kennlinien der beiden ziehenden Magneten (114A,B; 714) im Hinblick auf eine Optimierung der Dynamik abgestimmt sind.

13. Ventil nach Anspruch 11 oder 12, **dadurch gekennzeichnet, dass** die ziehenden Magnete (114A,B; 714) jeweils von Proportionalmagneten gebildet und gegensinnig aktiviert sind.

14. Ventil nach Anspruch 13, **dadurch gekennzeichnet, dass** die beiden Magnete (114A,B; 214A,B; 314A,B) in der ersten Stellung (Nullstellung) des Ventils, d.h. in einer Mittelstellung jeweils mit etwa 55% bestromt sind.

15. Ventil nach einem der Ansprüche 11 bis 14, gekennzeichnet durch die Ausbildung als Schaltventil, wobei die Magnete unlinearisiert sind.

16. Ventil nach einem der Ansprüche 11 bis 14, **gekennzeichnet durch** die Ausbildung als Proportionalventil, wobei die Magnete linearisiert sind.

17. Ventil nach einem der Ansprüche 1 bis 16, **dadurch gekennzeichnet, dass** der ziehende Magnet von einem Radialmagnet, bei dem die Magnetkraftkennlinien im wesentlichen radial verlaufen, oder von einer Kombination aus Axial- und Radialmagnet gebildet ist.

18. Ventil nach einem der Ansprüche 1 bis 17, **dadurch gekennzeichnet, dass** der Magnetanker der Magnetanordnung und/oder das Gehäuse (130) der Magnetspule (128) einen nahezu bis zur Mitte verlaufenden Schlitz haben, wobei der Schlitz im Magnetgehäuse (130) mit einem nichtmagnetischen Werkstoff, wie z.B. Kunststoff, Gummi oder einem elektrisch nicht leitenden Werkstoff abgedichtet ist.

19. Ventil nach einem der Ansprüche 1 bis 18, **dadurch gekennzeichnet, dass** das die Magnetspule (128) umgebende Gehäuse (130) der Magnetanordnung aus einem Wirbelstromverluste reduzierenden Zweistoff-Material besteht.

20. Ventil nach Anspruch 19, **dadurch gekennzeichnet, dass** sich längs durch das Gehäuse (130) eine nichtmagnetische und nicht elektrisch leitende Schicht erstreckt, mit der seitliche Schalen des Gehäuses fest verbunden, wie Z.B. verlötet, vernietet oder verklebt sind.

21. Ventil nach Anspruch 1 bis 20, **dadurch gekennzeichnet, dass** die dem ziehenden Magneten (114A,B) zugeordnete Druckfeder (124A,B) im Gehäuse des Magneten, vorzugsweise radial innerhalb der Magnetspule (128) angeordnet ist.

**Claims**

1. Electromagnetically operable control or regulating valve, especially a proportional displacement valve, having a valve body in the form of a valve piston that is displaceable against the force of a spring arrangement (124A,B; 524A,B; 624A,B; 724A,B) from a first position into at least one further functional position by an electrically controlled magnet assembly (114A,B; 714) having at least one linearly movable magnet armature (116; 516; 616; 716), the magnet assembly being arranged substantially coaxially with respect to the direction of movement of the valve piston (122; 722) and the valve piston being biased by way of oppositely acting compression springs (124A,B; 524A,B; 624A,B; 724A,B) into the first position (neutral position), **characterised in that** the magnet armature (116; 516; 616; 716) is a component of a tractive magnet and is urged directly towards the valve piston (122, 722) by the associated compression spring (124A,B; 524A,B; 624A, B; 724A,B) arranged on the side of the magnet armature remote from the valve piston.

2. Valve according to claim 1, **characterised in that** that the biasing force of the compression spring (124A,B; 524A,B; 624A,B; 724A,B) against which the tractive magnet armature (116; 516; 616; 716) acts is greater in each phase of the operation than the sum of the maximum magnetic tractive force and the influencing forces, such as friction and flow forces, acting on the valve piston (122; 722).

3. Valve according to claim 1 or 2, **characterised by** construction as a position-controlled valve, in which the position of the magnet armature (116; 516; 616; 716) is detectable directly by means of a displacement sensor or indirectly by means of a force sensor.

4. Valve according to any one of claims 1 to 3, **characterised in that** the spring characteristic of the compression springs (124A,B; 524A,B; 624A,B; 724A,B) is matched to the magnetic force rate of the magnet assembly (114A,B; 714) in such a way that a maximum dynamic performance of the valve movement control is produced.

5. Valve according to any one of claims 1 to 4, **characterised in that** the at least one magnet armature (116; 316; 516; 616; 716) is mounted directly in the pole tube (136; 636; 736) of the tractive magnet (114A,B; 614; 714) and is substantially cup-shaped to receive the associated compression spring (124A,B; 524A,B; 624A,B; 724A,B).

6. Valve according to any one of claims 1 to 6, **characterised in that** the biasing force of the compression springs (124A,B; 524A,B; 624A,B; 724A,B) is adjustable, by adjustment of the position of a supporting surface (140A,B; 640, 740) for the compression springs (124A,B; 524A,B; 624A,B; 724A,B), preferably the outer supporting surface (140A,B; 640, 740) remote from the valve piston (122, 722), relative to the magnet housing (130).

7. Valve according to any one of claims 1 to 6, **characterised in that** the at least one magnet armature (116; 516) extends into the valve housing (110; 510; 610; 710) at least in the first position (neutral position) of the valve.

8. Valve according to any one of claims 1 to 7, **characterised in that** when using a displacement sensor for an internal position control loop of the magnet assembly (114A,B; 714), a measuring rod is inserted through one of the two compression springs (124A,B; 524A,B; 624A,B; 724A,B).

9. Valve according to any one of claims 1 to 8, **characterised in that** when using a magnet assembly having just one tractive magnet (714), the compression spring (724A) remote from the magnet is supported directly on the valve piston (722).

10. Valve according to claim 9, **characterised in that** the tractive magnet (114A,B; 714) has a construction with which a linearisation of its characteristic is achievable.

11. Valve according to any one of claims 1 to 8, **characterised in that** when using a magnet assembly having two tractive magnets (114A,B) the entire drive train, comprising magnet armature (116A; 516: 616A) of the one side, valve piston (122) and magnet armature (116B; 516B; 616B) of the other side, is biased by the compression springs (124A, B; 524A,B; 624A,B).

12. Valve according to claim 11, **characterised in that** the characteristics of the compression springs (124A,B; 524A,B; 624A,B; 724A,B) are matched to one another and to the characteristics of the two tractive magnets (114A,B, 714) with a view to optimising the dynamic performance.

13. Valve according to claim 11 or 12, **characterised in that** the tractive magnets (114A,B; 714) are each formed by proportional magnets and are oppositely activated.

14. Valve according to claim 13, **characterised in that** the two magnets (114A,B; 214A,B; 314A,B) in the first position (neutral position) of the valve, that is, in a middle position, are each approximately 55% supplied with current.

15. Valve according to any one of claims 11 to 14, **characterised by** construction as a control valve, the magnets being non-linearised.

16. Valve according to any one of claims 11 to 14, **characterised by** construction as a proportional valve, the magnets being linearised.

17. Valve according to any one of claims 1 to 16, **characterised in that** the tractive magnet is formed by a radial magnet in which the magnetic force characteristics run substantially radially, or by a combination of an axial and a radial magnet.

18. Valve according to any one of claims 1 to 17, **characterised in that** the magnet armature of the magnet assembly and/or the housing (130) of the magnet coil (128) have a slot running almost to the centre, the slot in the magnet housing (130) being sealed with a non-magnetic material, for example, plastics material, rubber or an electrically non-conducting material.

19. Valve according to any one of claims 1 to 18, **characterised in that** the magnet assembly housing (130) surrounding the magnet coil (128) consists of a two-component material reducing eddy-current losses.

20. Valve according to claim 19, **characterised in that** along and through the housing (130) there extends a non-magnetic and non-electrically conducting layer to which lateral shells of the housing are fixedly connected, for example, soldered, riveted or adhesively secured.

21. Valve according to claims 1 to 20, **characterised in that** the compression spring (124A,B) associated with the tractive magnet (114A,B) is arranged in the housing of the magnet, preferably radially inside the magnet coil (128).

**Revendications**

1. Soupape de régulation ou de commande pouvant être actionnée par voie électromagnétique, en particulier distributeur proportionnel, avec un corps de soupape formant un piston à soupape qui coulisse d'une première position à au moins une autre position de fonctionnement contre la force d'un dispositif à ressorts (124A,B ; 524A,B ; 624A,B ; 724A,B), par une structure magnétique à commande électrique (114A,B ; 714) avec au moins un rotor de la magnéto (116 ; 516 ; 616 ; 716) déplaçable en ligne, dans laquelle la structure magnétique est disposée essentiellement coaxialement par rapport au sens du mouvement du piston à soupape (122 ; 722) et le piston à soupape est précontraint dans la première position (position nulle) au-dessus des ressorts de pression (124A,B ; 524A,B ; 624A,B ; 724A,B) agissant inversement, **caractérisée en ce que** le rotor de la magnéto (116 ; 516 ; 616 ; 716) est un aimant et est plaqué directement contre le piston à soupape (122 ; 722) par le ressort de pression (124A,B ; 524A,B ; 624A,B ; 724A,B) correspondant disposé sur la partie du rotor de magnéto opposée au piston à soupape.

2. Soupape selon la revendication 1, **caractérisée en ce que** la force, de précontrainte des ressorts de pression (124A,B ; 524A,B ; 624A,B ; 724A,B) contre laquelle travaille le rotor de la magnéto (116 ; 516 ; 616 ; 716) est plus importante à chaque phase de la commande que la somme de la force de traction magnétique maximale et des forces parasites qui agissent sur le piston à soupape (122 ; 722), telles que des forces de frottement et des forces de courant.

3. Soupape selon la revendication 1 ou 2, **caractérisée par** sa conception en tant que soupape à régulation de position dans laquelle la position du rotor de la magnéto (116 ; 516 ; 616 ; 716) peut être enregistrée directement au moyen d'un indicateur de course ou indirectement au moyen d'un capteur de force.

4. Soupape selon l'une quelconque des revendications 1 à 3, **caractérisée en ce que** la ligne caractéristique des ressorts de pression (124A,B ; 529A,B ; 624A,B ; 724A,B) est ajustée au niveau de la force magnétique de la structure magnétique (114A,B ; 714) de sorte que la dynamique de la commande du mouvement de la soupape est au maximum.

5. Soupape selon l'une quelconque des revendications 1 à 4, **caractérisée en ce que** au moins un rotor de la magnéto (116 ; 316 ; 516 ; 616 ; 716) est placé directement dans le conduit de pôles (136 ; 636 ; 736) de l'aimant (114A,B ; 614 ; 714) et comprend essentiellement une forme de bécher pour le logement des ressorts de pression correspondants (124A,B ; 524A,B ; 624A,B ; 724A,B).

6. Soupape selon l'une quelconque des revendications 1 à 6, **caractérisée en ce que** la force de précontrainte des ressorts de pression (124A,B ; 524A,B ; 624A,B ; 724A,B) est ajustable de sorte qu'une face d'appui (140A,B; 640; 740) pour les ressorts de pression (124A,B ; 524A,B ; 624A,B ; 724A,B), de préférence la face d'appui (140A,B ; 640 ; 740) externe opposée au piston à soupape (122 ; 722), est réglable au niveau de sa cote d'implantation par rapport au boîtier magnétique (130).

7. Soupape selon l'une quelconque des revendications 1 à 6, **caractérisée en ce que** au moins un rotor de la magnéto (116 ; 516) avance au moins dans la première position (position nulle) de la soupape dans la cage de soupape (110 ; 510 ; 610 ; 710).

8. Soupape selon l'une quelconque des revendications 1 à 7, **caractérisée en ce que** lors de l'utilisation d'un indicateur de course pour une régulation en boucle fermée de position interne de la structure magnétique (114A,B ; 714), une perche d'arpenteur est conduite par un des deux ressorts de pression (124A,B ; 524A,B ; 624A,B ; 724A,B).

9. Soupape selon l'une quelconque des revendications 1 à 8, **caractérisée en ce que** lors de l'utilisation d'une structure magnétique avec un seul aimant (714), le ressort de pression (724A) opposé à l'aimant repose directement sur le piston à soupape (722).

10. Soupape selon la revendication 9, **caractérisée en ce que** l'aimant (114A,B ; 714) présente une constitution qui permet d'atteindre une atténuation des distorsions non-linéaires.

**11.** Soupape selon l'une quelconque des revendications 1 à 8, **caractérisée en ce que** lors de l'utilisation d'une structure magnétique avec deux aimants (114A,B), l'ensemble de la ligne de commande composée du rotor de la magnéto (116A ; 516A ; 616A) d'un côté, et des pistons à soupape (122) et du rotor de la magnéto (116B ; 516B ; 616B) de l'autre côté, est déformé par les ressorts de pression (124A,B ; 524A,B ; 624A,B).

**12.** Soupape selon la revendication 11, **caractérisée en ce que** les lignes caractéristiques des ressorts de pression (124A,B ; 524A,B ; 624A,B ; 724A,B) sont accordées entre elles et sur les lignes caractéristiques des deux aimants (114A,B ; 714) en vue d'une optimisation de la dynamique.

**13.** Soupape selon la revendication 11 ou 12, **caractérisée en ce que** les aimants (114A,B ; 714) sont respectivement formés par des aimants proportionnels et activés en sens inverse.

**14.** Soupape selon la revendication 13, **caractérisée en ce que** les deux aimants (114A,B ; 214A,B ; 314A,B ) dans la première position (position nulle) de la soupape, c'est-à-dire dans une position intermédiaire, sont respectivement parcourus par le courant à environ 55 %.

**15.** Soupape selon l'une quelconque des revendications 11 à 14, **caractérisée par** sa conception en tant que soupape de commande, dans laquelle les aimants ne sont pas linéarisés.

**16.** Soupape selon l'une quelconque des revendications 11 à 14, **caractérisée par** sa conception en tant que soupape proportionnelle, dans laquelle les aimants sont linéarisés.

**17.** Soupape selon l'une quelconque des revendications 1 à 16, **caractérisée en ce que** l'aimant est formé par un aimant radial, dans lequel les lignes caractéristiques de force magnétique évoluent essentiellement de façon radiale, ou par une combinaison d'aimants axial et radial.

**18.** Soupape selon l'une quelconque des revendications 1 à 17, **caractérisée en ce que** le rotor de la magnéto de la structure magnétique et/ou la cage (130) de la bobine d'électro-aimant (128) a/ont une fente allant pratiquement jusqu'au milieu, dans laquelle la fente de la cage magnétique (130) est étanchéifiée à l'aide d'un matériau non magnétique, tel que par exemple un matériau synthétique, du caoutchouc ou un matériau ne conduisant pas l'électricité.

**19.** Soupape selon l'une quelconque des revendications 1 à 18, **caractérisée en ce que** la cage (130) entourant la bobine d'électro-aimant (128) de la structure magnétique est composée d'un matériau binaire réduisant les pertes par courant parasite.

**20.** Soupape selon la revendication 19, **caractérisée en ce qu'**une couche non magnétique et non conductrice traverse la cage (130) longitudinalement avec laquelle les feuillets latéraux de la cage sont fermement reliés, par exemple brasés, rivés ou collés.

**21.** Soupape selon la revendication 1 à 20, **caractérisée en ce que** les ressorts de pression (124A,B) attribués aux aimants attirants (114A,B) sont disposés dans la cage de l'aimant, de préférence radialement à l'intérieur de la bobine d'électro-aimant (128).

FIG.1

EP 1 200 762 B1

# FIG. 2A

# FIG. 2B

# FIG. 3

EP 1 200 762 B1

FIG.4A
(STAND DER TECHNIK)

MS

Gehäuse    Druckrohr

VG

Anker    MA

VK    ST

610    636    616

654

652

632

640

624    636

614

FIG.4B

EP 1 200 762 B1

FIG. 5A
(STAND DER TECHNIK)

Druckrohr

Anker

Gehäuse

FIG. 5B

714
736
724 B
740
716
710
722
724A